# EUROPEAN PATENT SPECIFICATION

(11) **EP 1 895 635 B1**
(45) Date of publication and mention of the grant of the patent: **21.07.2010**
(21) Application number: 07009233.3
(22) Date of filing: 08.05.2007
(51) Int. Cl.: H02J 7/00

(54) **Embedded battery control circuit and driving method thereof**
Eingebettete Batteriesteuerschaltung und Betriebsverfahren dafür
Circuit de contrôle d'une batterie intégrée et son procédé de commande

(30) Priority: 01.09.2006 KR 20060084311
(43) Date of publication of application: 05.03.2008
(73) Proprietor: Samsung Electronics Co., Ltd., Suwon-si, Gyeonggi-do (KR)
(72) Inventor: Noh, Dong Hoon, Suwon-si, Gyeonggi-do (KR); Noh, Ki Young, Suwon-si, Gyeonggi-do (KR); Choi, Moon Hyuk, Suwon-si, Gyeonggi-do (KR); Choi, Jin Sub, Suwon-si, Gyeonggi-do (KR); Yun, Ha Jung, Suwon-si, Gyeonggi-do (KR)
(74) Representative: Lang, Johannes

(56) References cited:
- DE-A- 19 713 570
- US-A- 5 251 179
- US-A1- 2005 180 067
- US-B1- 6 365 991
- "CHARGE AND DISCHARGE FUNCTION IN A NOTEBOOK PC" IBM TECHNICAL DISCLOSURE BULLETIN, IBM CORP. NEW YORK, US, vol. 34, no. 10B, 1 March 1992 (1992-03-01), pages 335-338, XP000302752 ISSN: 0018-8689

## Description

### BACKGROUND OF THE INVENTION

### Field of the Invention:

The present invention relates to an embedded battery control circuit and a driving method thereof. More particularly, the present invention relates to an embedded battery control circuit that facilitates a selective connection to an embedded battery or to a main power supply line for a proper supply of test power in a mass production process of mobile terminals with an embedded battery, and a method thereof.

### Description of the Prior Art:

Mobile terminals are commonly used in various fields due to their portability, variety of application programs and high usability. Among the mobile terminals, mobile communication terminals have a function of voice communication while moving, and thereby mobile communication terminal users (telephone subscribers) are rapidly increasing.

In the initial state of developing mobile terminals, the mobile terminals had a relatively large size and weight for the stability of a battery and electronic devices installed in the mobile terminal. However, with recent developments in the battery and electronic devices, the size (especially, thickness) and weight of the mobile terminal are gradually being reduced. Reduction in the size and weight of the mobile terminal effects a change in the application and installation methods for the battery. For example, mobile terminals such as slim-type mobile phones manufactured with an embedded battery have very large sales volumes corresponding to consumers' satisfaction.

In a mass production process of mobile terminals, the mobile terminals are tested for terminal characteristic inspections such as radio frequency (RF) characteristic inspection and terminal set characteristic inspection. In a terminal characteristic inspection process, various environments are provided to practically test the terminal set, and operation of the mobile terminal is tested in the practical environments. The terminal characteristic inspection process is essential for predicting a failure rate of the mobile terminals in mass production and for satisfying consumers' requirements. Therefore, various levels of power must be supplied to the mobile terminal for the terminal characteristic inspections.

Test power must be supplied to a battery embedded in a mobile terminal for the terminal characteristic inspections. However, the test power cannot be supplied to a battery embedded in a conventional mobile terminal, because the embedded battery is preinstalled in the conventional mobile terminal. In more detail, a main power supply line is connected only to the embedded battery for supplying power to the conventional mobile terminal, and thereby the power supply is maintained at a certain level. Power supply at various levels required for the inspection cannot be properly applied to the conventional mobile terminal, and compulsive power supply to the mobile terminal may overload and damage the embedded battery.

Accordingly, there is a need for an improved system and method for providing an embedded battery control circuit for isolating an embedded battery from an external power supply unit when power is supplied from the outside to inspect a mobile terminal comprising an embedded battery.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide an embedded battery control circuit for isolating an embedded battery from an external power supply unit when power is supplied from the outside to inspect a mobile terminal having an embedded battery or for other purposes, and a driving method thereof.

In order to achieve the above and other objects, an embedded battery control circuit according to an exemplary embodiment of the present invention includes a main power supply line, an embedded battery, an external power supply unit and a switching unit. The main power supply line supplies power to a terminal set. The embedded battery is installed in the terminal set and supplies drive power to the terminal set by selectively connecting to the main power supply line. The external power supply unit supplies power to the terminal set from the outside. The switching unit is disposed between the embedded battery, the main power supply line, and the external power supply unit, for connection controls according to the type of the external power supply unit.

According to an exemplary embodiment of the present invention, a driving method for an embedded battery control circuit includes the steps of identifying whether external power supplied to a main power supply line is recharge power or test power and isolating an embedded battery from a main power supply line by controlling a switching unit according to the type of an external power supply unit. The embedded battery control circuit has the main power supply line as a power supply route to a terminal set, the embedded battery in the mobile terminal for supplying drive power to the terminal set by selectively connecting to the main power supply line, the external power supply unit for supplying power to the terminal set from the outside, and the switching unit disposed between the embedded battery, the main power supply line, and the external power supply unit.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other exemplary objects, features and advantages of the present invention will become more apparent from the following detailed description in conjunction with the accompanying drawings, in which:

FIG. 1 is a schematic block diagram illustrating a configuration of an embedded battery control circuit in a mobile terminal according to an exemplary embodiment of the present invention;

FIG. 2 is a circuit diagram illustrating an embedded battery control circuit according to a first exemplary embodiment of the present invention;

FIG. 3 is a circuit diagram illustrating a power-on signal flow in the embedded battery control circuit of FIG. 2;

FIG. 4 is a circuit diagram illustrating a hold signal flow in the embedded battery control circuit of FIG. 2;

FIG. 5 is a circuit diagram illustrating test power and test signal flows in the embedded battery control circuit of FIG. 2;

FIG. 6 is a circuit diagram illustrating an embedded battery control circuit according to a second exemplary embodiment of the present invention;

FIG. 7 is a circuit diagram illustrating an embedded battery recharge circuit according to an exemplary embodiment of the present invention;

FIG. 8 is a circuit diagram illustrating a flow of an integrated power greater than an embedded battery power in the embedded battery control circuit of FIG. 6; and

FIG. 9 is a circuit diagram illustrating a flow of an integrated power less than or equal to an embedded battery power in the embedded battery control circuit of FIG. 6.

Throughout the drawings, the same drawing reference numerals will be understood to refer to the same elements, features and structures.

### DETAILED DESRCIPTION OF EXEMPLARY EMBODIMENTS

The matters defined in the description such as a detailed construction and elements are provided to assist in a comprehensive understanding of the embodiments of the invention. Also, descriptions of well-known functions and constructions are omitted for clarity and conciseness.

An exemplary embodiment of the present invention using a transistor as a switch applied to an embedded battery control circuit of a mobile terminal is described as follows. In an exemplary implementation, the switch applied to the embedded battery control circuit is hardware that selectively transmits a signal from one side to the other side, such as a complementary metal-oxide semiconductor (CMOS), an n-channel metal-oxide semiconductor (NMOS), a p-channel metal-oxide semiconductor (PMOS), a bipolar junction transistor (BJT), a toggle switch, and an integrated circuit chip with a switch function. Additional extended or modified forms of the above devices may also be applied. According to an exemplary implementation, an emitter, base, and collector correspond to a source, gate, and drain respectively when the transistor is substituted by a CMOS.

According to an exemplary implementation of an exemplary embodiment of the present invention, an embedded battery is denoted by VBTT, a main power supply line for supplying power to each component of a terminal set is denoted by VBTL, a test power supply unit is denoted by VBTM, and a recharge power supply unit is denoted by VBTO. An external power supply unit supplies power to the mobile terminal from the outside, and may include the test power supply unit VBTM and the recharge power supply unit VBTO.

The mobile terminal, according to an exemplary embodiment of the present invention, is a terminal with an embedded battery, and may be all information and communication appliances and multimedia appliances, such as a mobile communication terminal, a digital broadcast receiving terminal, a personal digital assistant (PDA), a smart phone, an international mobile telecommunication 2000 (IMT-2000) terminal, a wideband code division multiple access (WCDMA) terminal, a universal mobile telecommunication service (UMTS) terminal, and their applications.

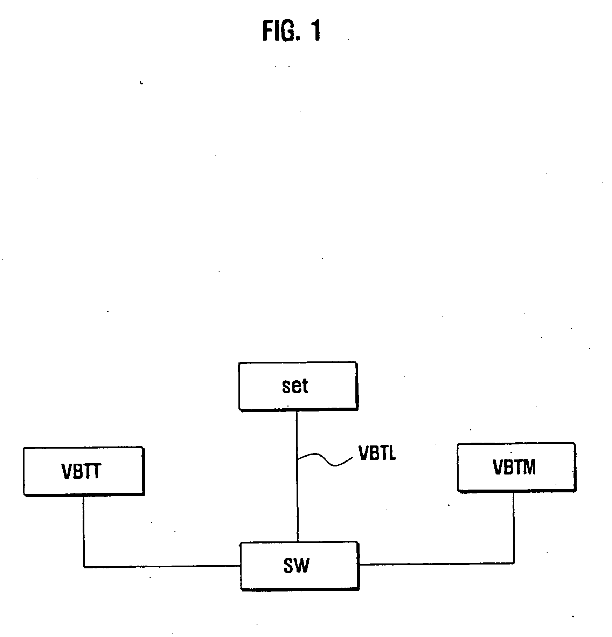

FIG. 1 is a schematic block diagram showing a configuration of an embedded battery control circuit in a mobile terminal according to an exemplary embodiment of the present invention.

Referring to FIG. 1, the mobile terminal comprising an embedded battery includes a terminal set, a main power supply line VBTL connected to the terminal set, an embedded battery VBTT for supplying power to the terminal set through the main power supply line VBTL, a test power supply unit VBTM required for terminal set characteristic inspection, and a switching unit SW. The switching unit SW is disposed between the embedded battery VBTT, main power supply line VBTL, and test power supply unit VBTM. The switching unit SW selectively connects the embedded battery VBTT and the test power supply unit VBTM to the main power supply line VBTL according to a signal transmitted by the test power supply unit VBTM. The embedded battery control circuit may further include a recharge power supply unit VBTO (not shown) for recharging the embedded battery VBTT. The test power supply unit VBTM and the recharge power supply unit VBTO are external power supply units, and supply power to the terminal set from the outside by connecting to a connector of the terminal set.

The terminal set includes various components and a circuit pattern connecting the components to each other. The components may include a microphone, an audio processing unit, a radio frequency (RF) unit, a data processing unit, a key input unit, a camera, a display unit and a control unit. The microphone collects audio input and the audio processing unit has a speaker to play the audio. The RF unit forms a communication channel with external systems and the data processing unit processes data received by the RF unit. The key input unit generates an input signal, the camera takes an image, the display unit displays the image and the control unit controls each component. The terminal set may further include a printed circuit board formed in a circuit pattern, a connector for a power supply jack, and a recharge circuit for recharging the embedded battery VBTT.

The main power supply line VBTL is a route for supplying power to the terminal set. The main power supply line VBTL is selectively connected to the embedded battery VBTT or to the connector through which test power or recharge power is supplied. The main power supply line VBTL is normally connected to the embedded battery VBTT so that power from the embedded battery VBTT is supplied to the terminal set. However, in an inspection process of mass production, the main power supply line VBTL is disconnected from the embedded battery VBTT and connected to the test power supply unit VBTM, so that various electric signals may be transmitted from the test power supply unit VBTM to the terminal set.

The embedded battery VBTT is preinstalled in a mobile terminal and supplies power (for example, 5 volts) required for the operation of the terminal set. The embedded battery VBTT may be secondary or rechargeable batteries, such as a lithium battery, a nickel-cadmium battery, a nickel-metal hydride battery, and other chemical batteries.

The test power supply unit VBTM is a power supply unit transmitting a test signal Test_sig required for the inspection of characteristics of components included in the terminal set, and the test signal Test_sig is transmitted at various levels of power. That is, the test power supply unit VBTM may supply power at a certain level equal to that of the embedded battery VBTT, and may further supply a higher or lower level of power (voltage and current) than the embedded battery VBTT.

The switching unit SW is disposed between the main power supply line VBTL, the embedded battery VBTT, and the test power supply unit VBTM. The switching unit SW selectively controls the connection between the main power supply line VBTL and the embedded battery VBTT, and the connection between the main power supply line VBTL and the test power supply unit VBTM. If transmission of a test signal Test_sig is requested, the switching unit SW connects the main power supply line VBTL to the test power supply unit VBTM, and if recharging of the embedded battery VBTT is requested, the switching unit connects the embedded battery VBTT to the recharge power supply unit VBTO and maintains the connection between the main power supply line VBTL and the embedded battery VBTT.

Exemplary embodiments of the present invention are described below based on the type of switching unit.

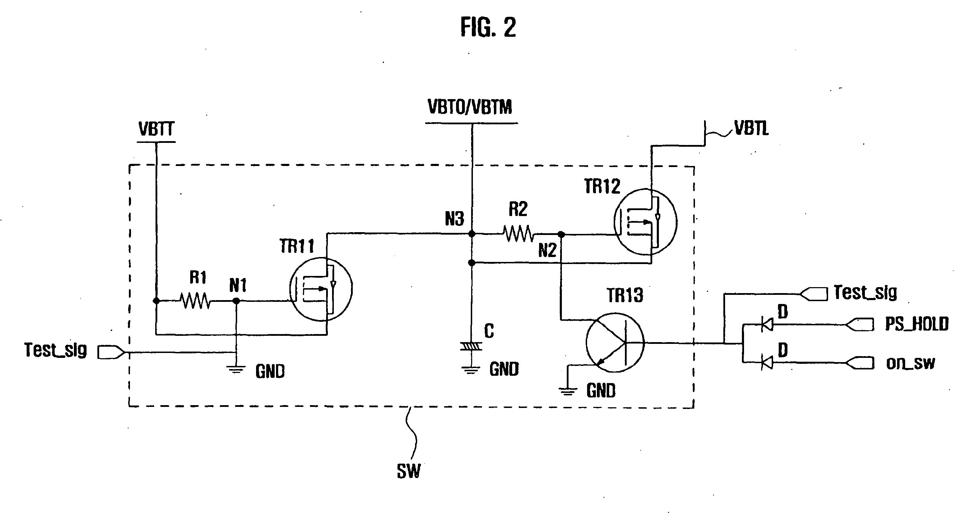

FIG. 2 is a circuit diagram illustrating an embedded battery control circuit according to a first exemplary embodiment of the present invention.

Referring to FIG. 2, the embedded battery control circuit includes a main power supply line VBTL, an embedded battery VBTT, a test power supply unit VBTM, and a switching unit SW.

The configuration of the main power supply line VBTL, the embedded battery VBTT, and the test power supply unit VBTM included in the embedded battery control circuit is similar to that illustrated in FIG. 1, and therefore detailed descriptions of these components are omitted. An external power supply unit including the test power supply unit VBTM and a recharge power supply unit VBTO supplies power to a terminal set through a connector included in the terminal set.

The switching unit SW includes a first transistor TR11 disposed between the embedded battery VBTT and the external power supply unit VBTM/VBTO, a second transistor TR12 disposed between the main power supply line VBTL and the external power supply unit VBTN/VBTO, a first node N 1 formed as a connection point for the base of the first transistor TR11, a second note N2 formed as a connection point for the base of the second transistor TR12, a third node N3 formed between the first transistor TR11 and the second transistor TR12, and a third transistor TR13 disposed between the second node N2 and a ground GND. The switching unit SW may further include a first resistor R1, a second resistor R2 and a capacitor C. The first resistor R1 is disposed between the first node N1 and the embedded battery VBTT for the stabilization of a circuit by protecting the circuit from an overcurrent. The second resistor R2 is disposed between the external power supply unit VBTM/VBTO and the second node N2. The capacitor C is disposed between the external power supply unit VBTM/VBTO and the ground GND. A test signal Test_sig is transmitted to the first node N1. The test signal Test_sig, a power-on signal on_sw, and a hold signal PS_HOLD are selectively transmitted to the base of the third transistor TR13. Diodes D may be included between the third transistor TR13 and the power-on signal supply on_sw, and between the third transistor TR13 and the hold signal PS_HOLD supply to protect the third transistor TR13 from a counter-flow of the signal. The first transistor TR11 and the second transistor TR12 are P-type transistors maintaining a turn-on state when a low voltage is formed at their bases, and the third transistor TR13 is an N-type transistor maintaining a turn-on state when a high voltage is formed at its base.

A driving method of the embedded battery control circuit, according to the first exemplary embodiment of the present invention, is described.

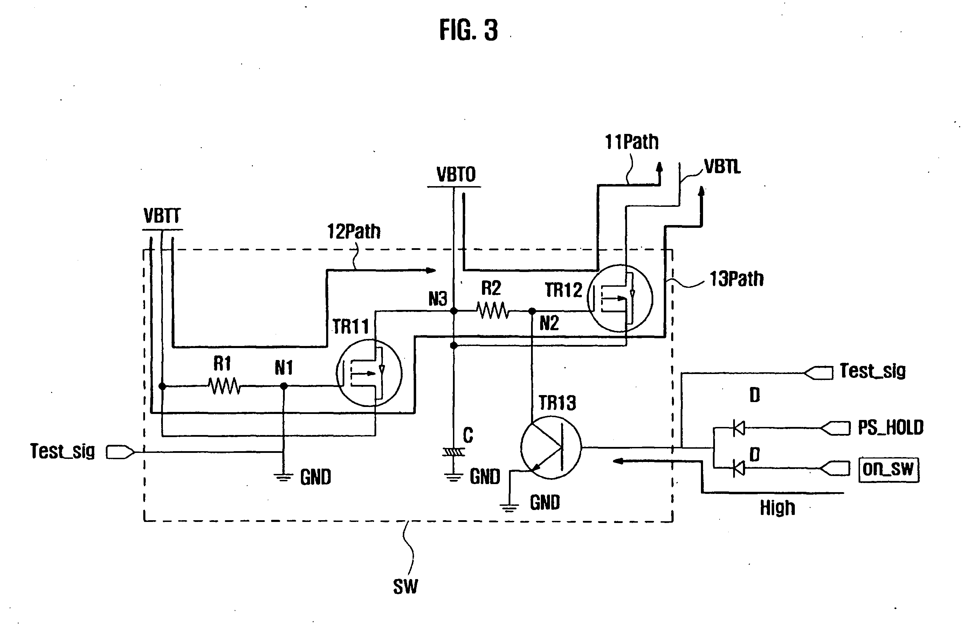

FIGS. 3 to 5 are circuit diagrams illustrating signal flows in the embedded battery control circuit according to the first exemplary embodiment of the present invention.

If no test signal Test_sig is input, the external power supply unit VBTM/VBTO operates as a recharge power supply unit VBTO, and if a test signal Test_sig is input, the external power supply unit VBTM/VBTO operates as a test power supply unit VBTM. Supply of test power or recharge power may be identified when a power supply unit is connected to the terminal set. A plurality of pins are disposed on the connector formed in the terminal set and pins to be connected to a jack of the test power supply unit VBTM and pins to be connected to a jack of the recharge power supply unit VBTO may be disposed in different methods. Accordingly, in an inspection process, power supplied to the connector may be selectively transmitted to the test power supply unit VBTM or to the recharge power supply unit VBTO. Although the external power supply unit including the test power supply VBTM unit and the recharge power supply unit VBTO has only one connector, power may be distributed to the test power supply unit VBTM and the recharge power supply unit VBTO individually according to requirements.

FIG. 3 is a circuit diagram illustrating a flow of power-on signal on_sw in the embedded battery control circuit, when no test signal Test_sig is input.

Referring to FIG. 3, if no test signal Test_sig is input and a power-on signal on_sw in a high voltage High is transmitted to the third transistor TR13 according to a power-on key input, the third transistor TR13 enters a turn-on state. Accordingly, a low voltage GND is formed at the base of the second transistor TR12, and the second transistor TR12 enters a turn-on state. According to an exemplary implementation, a first pass 11 Path is formed through the recharge power supply unit VBTO, second resistor R2, second node N2, second transistor TR12, and main power supply line VBTL.

Because no test signal Test_sig is input, a low voltage GND is formed at the first node N1, and the first transistor TR11 enters a turn-on state. Accordingly, a second pass 12Path is formed through the embedded battery VBTT, first resistor R1, first node N1, first transistor TR11, and recharge power supply unit VBTO. As a result, the first pass 11 Path is connected to the second pass 12Path, and a third pass 13Path is formed through the embedded battery VBTT, first resistor R1, first node N1, first transistor TR11, third node N3, second resistor R2, second node N2, second transistor TR12, and main power supply line VBTL. Accordingly, power of the embedded battery VBTT is supplied to the main power supply line VBTL. If the recharge power supply unit VBTO is not connected, the power of the embedded battery VBTT may be supplied directly to the main power supply line VBTL.

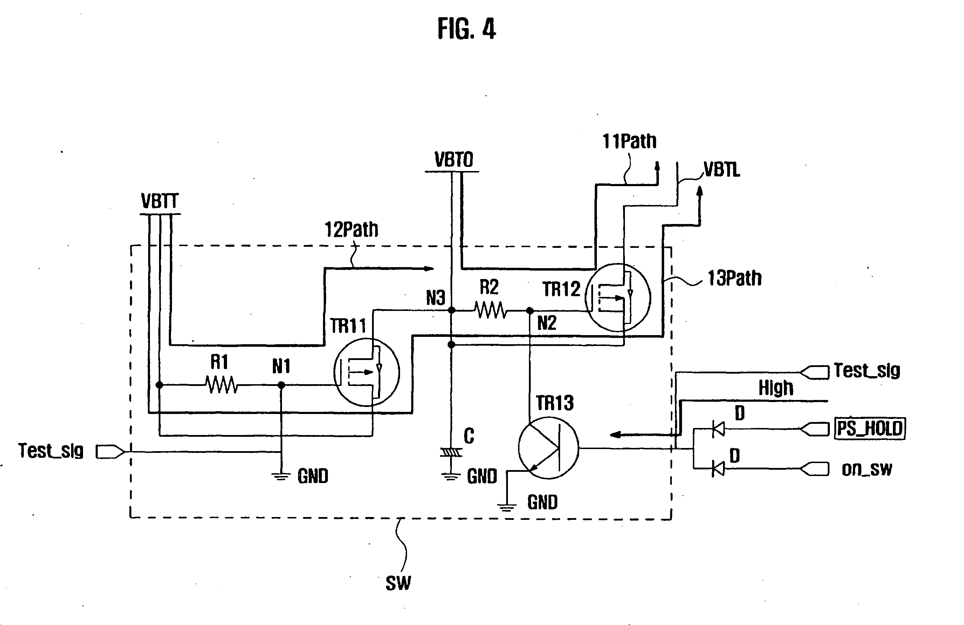

FIG. 4 is a circuit diagram illustrating a flow of hold signal PS_HOLD in the embedded battery control circuit, when no test signal Test_sig is input.

Referring to FIG. 4, if no test signal Test_sig is input and a hold signal PS_HOLD is input by a modem chip included in the terminal set, the hold signal PS_HOLD is transmitted to the third transistor TR13 through the diode D. Accordingly, a high voltage High of the hold signal PS_HOLD is formed at the base of the third transistor TR13, and the third transistor TR13 enters a turn-on state. As a result, a low voltage GND is formed at the base of the second transistor TR12, and the second transistor TR12 remains in a turn-on state. Accordingly, a first pass 11Path is formed through the recharge power supply unit VBTO, second resistor R2, second node N2, second transistor TR12, and main power supply line VBTL.

Because no test signal Test_sig is input, a low voltage GND is formed at the first node N1 and the first transistor TR11 enters a turn-on state. Accordingly, a second pass 12Path is formed through the embedded battery VBTT, first resistor R1, first node N1, first transistor TR11, and recharge power supply unit VBTO. As a result, the first pass 11 Path is connected to the second pass 12Path, and a third pass 13Path is formed through the embedded battery VBTT, first resistor R1, first node N1, first transistor TR11, third node N3, second resistor R2, second node N2, second transistor TR12, and main power supply line VBTL. Accordingly, power of the embedded battery VBTT is supplied to the main power supply line VBTL. When the recharge power supply unit VBTO is connected, power may be supplied to the embedded battery VBTT for recharging and to the main power supply line VBTL.

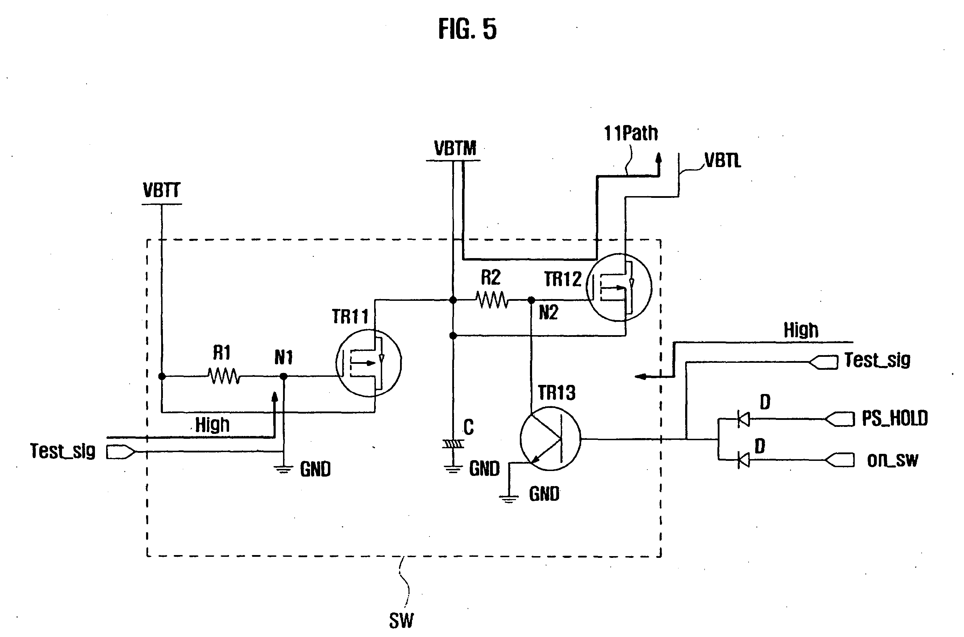

FIG. 5 is a circuit diagram illustrating flows of test power and test signals in the embedded battery control circuit, when a test signal Test_sig is input.

Referring to FIG. 5, if a test signal Test_sig is input, a test signal Test_sig in a high voltage High is transmitted to the base of the third transistor TR13, and the third transistor TR13 enters a turn-on state. As a result, a low voltage GND is formed at the base of the second transistor TR12, and the second transistor TR12 remains in a turn-on state. Accordingly, a first pass 11 Path is formed through the test power supply unit VBTM, the second resistor R2, the second node N2, the second transistor TR12, and the main power supply line VBTL.

At the same time, the test signal Test_sig in a high voltage High is transmitted to the first node N1, and a high voltage High is formed at the base of the first transistor TR11. Accordingly, the first transistor TR11 enters a turn-off state. As a result, the connection between the embedded battery VBTT and the test power supply unit VBTM is cut off. Accordingly, power is not transmitted from the test power supply unit VBTM to the embedded battery VBTT, and the embedded battery VBTT is isolated and has no influence on the main power supply line VBTL while the power is being supplied from the test power supply unit VBTM to the main power supply line VBTL.

The embedded battery control circuit and the driving method, according to the first exemplary embodiment of the present invention, protect an embedded battery from damage and facilitate correct terminal characteristic inspection, because the embedded battery supplies power to a main power supply line and activates a terminal set while no test signal is being transmitted, and the embedded battery is isolated from a test power supply unit and a main power supply line while a test signal is being transmitted.

According to an exemplary embodiment of the present invention, the embedded battery control circuit does not have an additional recharge circuit, and may thereby be applied to a travel charger type(TA) terminal comprising a separate recharge adaptor.

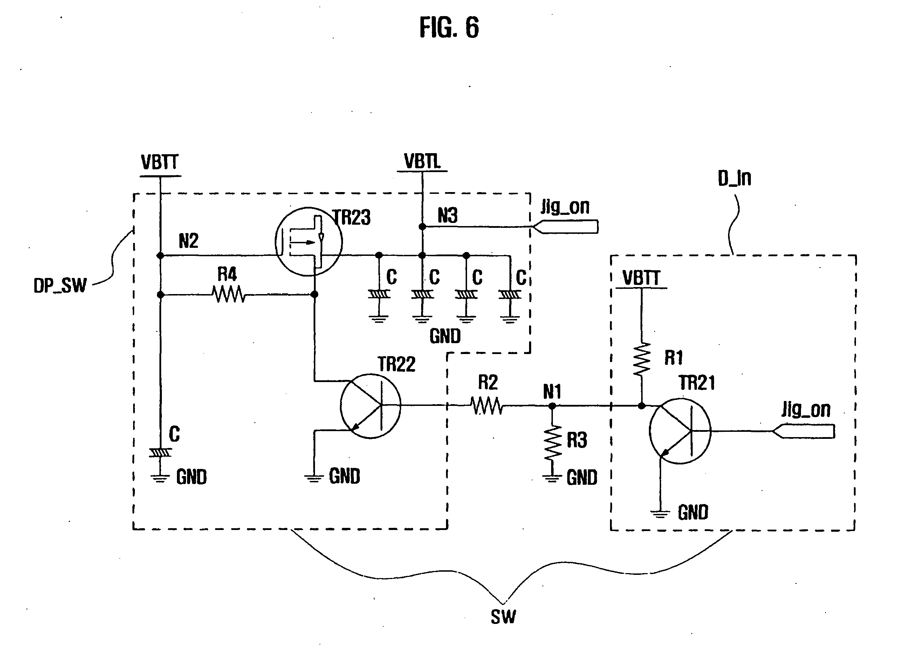

FIG. 6 is a circuit diagram illustrating an embedded battery control circuit according to a second exemplary embodiment of the present invention.

Referring to FIG. 6, the embedded battery control circuit includes a main power supply line VBTL, an embedded battery VBTT and a switching unit SW. The main power supply line VBTL provides a route for supplying power to a terminal set and the embedded battery VBTT is selectively connected to the main power supply line VBTL. The switching unit SW includes a power supply unit D_In for receiving an integrated power Jig_on and a power distributing and switching unit DP_SW for selectively switching between the power supply unit D_In, the embedded battery VBTT, and the main power supply line VBTL.

The power distributing and switching unit DP_SW includes a second transistor TR22, a third transistor TR23, a second node N2 and a third node N3. The second transistor receives the output of the power supply unit D_In through the base of the second transistor TR22. The third transistor TR23 is disposed between the embedded battery VBTT and the main power supply line VBTL, and has a base that is connected to the collector of the second transistor TR22. The second node N2 is disposed between the embedded battery VBTT and the third transistor TR23. The third node N3 is disposed between the main power supply line VBTL and the third transistor TR23, and to which an integrated power Jig_on is connected. The power distributing and switching unit DP_SW may further include a fourth resistor R4 disposed between the second node N2 and the base of the third transistor TR23, and a plurality of capacitors C between the third node N3 and a ground GND, for the stabilization of a circuit by protecting the circuit from an overcurrent. A diode disposed in the third transistor TR23 is used as a route through which the embedded battery VBTT supplies power to the main power supply line VBTL.

The power supply unit D_In includes a first transistor TR21 disposed between the embedded battery VBTT and the ground GND, and whose base is connected to the integrated power Jig_on. The power supply unit D_In may further include a first resistor R1 disposed between the embedded battery VBTT and the collector of the first transistor TR21 to protect a circuit from an overcurrent.

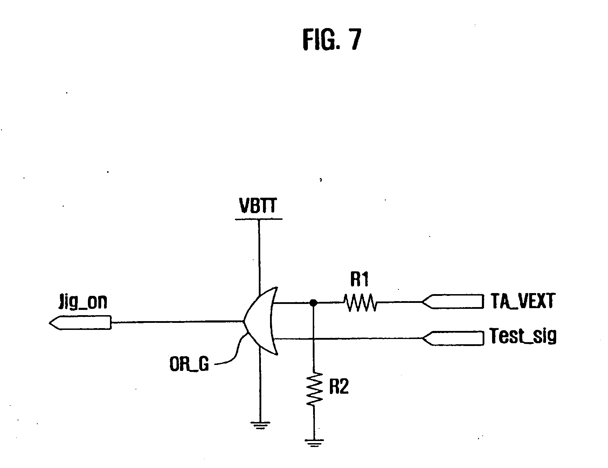

The integrated power Jig_on is supplied from the outside, and is used for recharging the embedded battery VBTT or for testing a terminal set. Recharge power is supplied through a recharge power jack and a connector, and test power is supplied through a test power jack and the connector. If the terminal set is a TA-type terminal comprising an internal recharge circuit, the terminal set may further include an output unit, illustrated in FIG. 7, to identify the type of the integrated power Jig_on.

Fig. 7 is a circuit diagram illustrating an embedded battery recharge circuit according to an exemplary embodiment of the present invention, including an integrated power output unit for receiving power from an external supply unit VBTO/VBTM and outputting the power to the power supply input unit D_In. The integrated power output unit receives power from the recharge power supply unit VBTO or the test power supply unit VBTM, and outputs the power to the power supply input unit D_In.

Referring to FIG. 7, the integrated power output unit includes a recharge power input terminal TA_VEXT, a test power input terminal Test_sig; an OR gate OR_G and an embedded battery. The OR gate OR_G outputs power received from the recharge power input terminal TA_VEXT or the test power input terminal Test_sig to the integrated power supply terminal Jig_on. The embedded battery VBTT supplies power required for driving the OR gate OR_G. The integrated power output unit may further include a first resistor R1 disposed between the OR gate OR_G and the recharge power supply input terminal TA_VEXT, and a second resistor R2 disposed between the OR gate OR_G and a ground GND, for protecting the OR gate OR_G from an overload. The integrated power output unit has a function of outputting at least one of the recharge power and the test power to the embedded battery control circuit.

A driving method of the embedded battery control circuit according to the second exemplary embodiment of the present invention is described.

The recharge power supply unit is a power supply unit for recharging the embedded battery VBTT, and supplies a recharge voltage (for example, 5 volts) to the embedded battery VBTT. The test power supply unit may supply a voltage at various levels. According to an exemplary implementation, the first transistor TR21 and the second transistor TR22 are N-type transistors maintaining a turn-on state when a high voltage is formed at their bases, and the third transistor TR23 is a P-type transistor maintaining a turn-on state when a low voltage is formed at its base. However, exemplary embodiments of the present invention are not limited to characteristics of the switching units, and any type of switching unit that can selectively control the connection between the main power supply line VBTL and the embedded battery VBTT may be used according to the characteristics of the integrated power supply Jig_on.

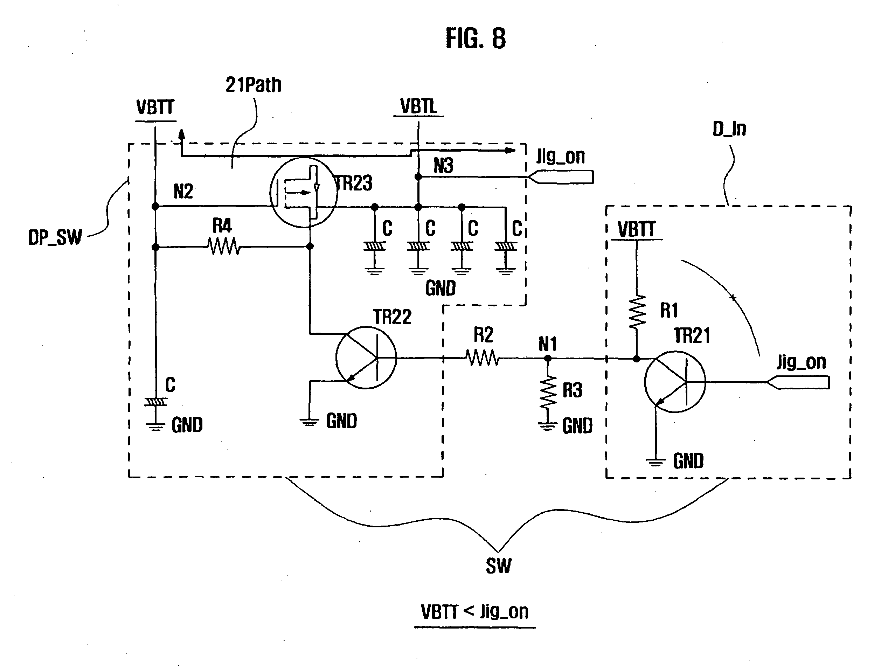

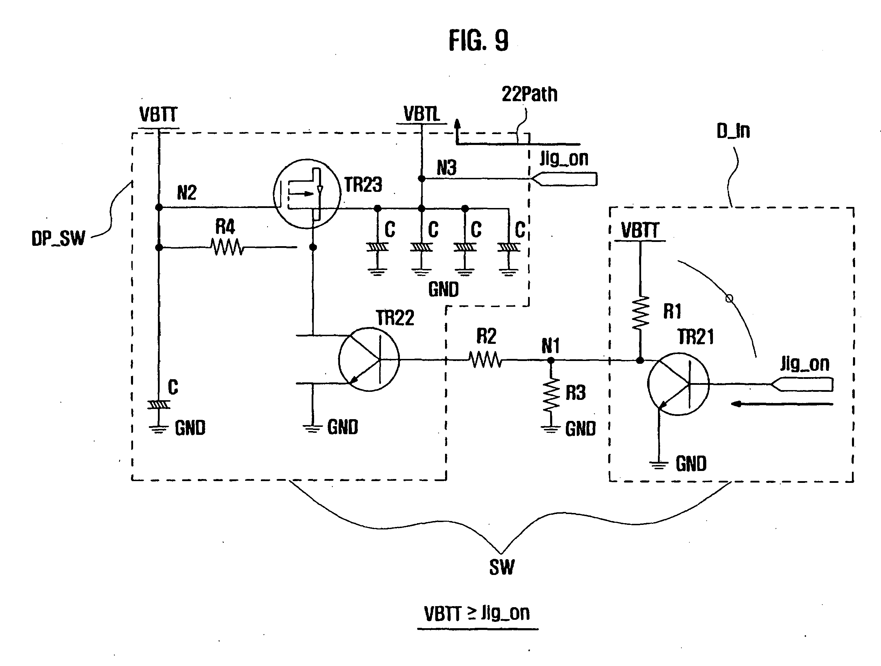

FIGS. 8 and 9 are circuit diagrams illustrating signal flows in the embedded battery control circuit according to the second exemplary embodiment of the present invention. FIG. 8 is a circuit diagram illustrating a flow of an integrated power supply greater than an embedded battery power supply in the embedded battery control circuit, and FIG. 9 is a circuit diagram illustrating a flow of an integrated power less than or equal to an embedded battery power in the embedded battery control circuit.

Referring to FIG. 8, when an integrated power Jig_on is greater than an embedded battery VBTT power, a voltage difference is not generated and the first transistor TR21 maintains a turn-off state. According to an exemplary implementation, if the integrated power Jig_on is a recharge power for recharging the embedded battery VBTT, a voltage difference between the collector of the first transistor TR21 and the base of the first transistor TR21 is not generated, and thereby the first transistor TR21 maintains a turn-off state. Accordingly, power of the embedded battery VBTT is supplied to the base of the second transistor TR22, and the second transistor TR22 enters a turn-on state. If the second transistor TR22 is in a turn-on state, the base of the third transistor TR23 enters a low voltage state GND and the third transistor TR23 enters a turn-on state. If the third transistor TR23 is in a turn-on state, a first pass 21 Path is formed through the embedded battery VBTT, second node N2, third transistor TR23, third node N3, and integrated power supply Jig_on, and thereby the embedded battery VBTT is recharged by the power supplied from the integrated power supply Jig_on.

Referring to FIG. 9, if the integrated power Jig_on is less than or equal to the embedded battery VBTT power, a voltage greater than the voltage at the collector of the first transistor TR21 is formed at the base of the first transistor TR21 and the first transistor TR21 enters a turn-on state. The embedded battery VBTT power connected to the collector of the first transistor TR21 is grounded and a low voltage is formed at the base of the second transistor TR22, and thereby the second transistor TR22 enters a turn-off state. A high voltage of the embedded battery VBTT is formed at the base of the third transistor TR23, and the third transistor TR23 maintains a turn-off state. As a result, connection between the embedded battery VBTT and the third node N3 is cut off, and test power from the integrated power supply Jig_on is supplied through the second pass 22Path connecting the third node N3 and the main power supply line VBTL.

As described above, the embedded battery control circuit, according to the second exemplary embodiment of the present invention, avoids damage to an embedded battery by selectively supplying an integrated power and selectively isolating the embedded battery from a test power supply unit, and provides an improved environment for terminal characteristic inspection by supplying test power to a main power supply line in the state that the embedded battery is isolated.

According to an embedded battery control circuit and a driving method thereof disclosed by the present invention, an embedded battery may be isolated from an external power supply in a terminal inspection process, and thereby a proper test power may be supplied in the terminal inspection process.

Additionally, production processes and productivity of mobile terminals comprising an embedded battery may be improved by separating embedded battery power from test power without having to disassemble the embedded battery from the mobile terminals comprising an embedded battery.

While the present invention has been shown and described with reference to certain exemplary embodiments, it will be understood by those skilled in the art that various changes in form and details may be made as defined by the appended claims and their equivalents.

## Claims

1. An embedded battery control circuit comprising:
a main power supply line (VBTL) for supplying power to a terminal set;
an embedded battery (VBTT) for supplying drive power to the terminal set by selectively connecting to the main power supply line;
an external power supply unit for supplying test and recharge power to the terminal set from the outside at one connector of the terminal set; and
a switching unit (SW) disposed between the embedded battery, the main power supply line, and the external power supply unit, adapted to provide connection controls according to the type of the external power supply unit, wherein, if the external power supply unit comprises a recharge power supply unit (VBTO), the switching unit connects the embedded battery to the recharge power supply unit and maintains electric connection with the main power supply line and the recharge power supply unit, and if the external lower supply unit comprises a test power supply unit (VBTM) the switching unit isolates the embedded battery from the test power supply unit and from the main power supply unit.

2. The embedded battery control circuit of claim 1, wherein the external power supply unit comprises at least one of a recharge power supply unit (VBTO) for recharging the embedded battery (VBTT), and a test power supply unit (VBTM) for inspecting the characteristics of the terminal set, wherein the test power supply unit and the recharge power supply unit are connected at the same connector of the terminal set.

3. The embedded battery control circuit of claim 1, wherein, if the external power supply unit comprises the test power supply unit, the embedded battery (VBTT) is isolated from at least one of the main power supply line (VBTL) and the test power supply unit (VBTM) according to a test signal (Test_sig).

4. The embedded battery control circuit of claim 2, further comprising, if the terminal set comprises a recharge circuit for recharging the embedded battery, an output unit for distributing external power to at least one of the recharge power supply unit (VBTO) and to the test power supply unit (VBTM).

5. The embedded battery control circuit of claim 4, wherein the output unit comprises:
a recharge power input terminal (TA_VEXT) for inputting recharge power;
a test power input terminal (Test_sig) for inputting test power; and
an OR gate (OR_G) for supplying at least one of the recharge power and the test power, controlled by power supplied from the embedded battery (VBTT).

6. The embedded battery control circuit of claim 1, wherein the switching unit (SW) comprises:
a power supply unit (D_In) for receiving an integrated power supplied from the outside; and
a power distributing and switching unit (DP_SW) for selectively switching to at least one of the embedded battery (VBTT), the main power supply line (VBTL), and the power supply unit (D_In).

7. The embedded battery control circuit of claim 1, wherein the embedded battery (VBTT) is comprised in the terminal set.

8. A driving method for an embedded battery control circuit, the method comprising:
identifying whether external power supplied to a main power supply line (VBTL) is at least one of recharge power and test power; and
isolating an embedded battery from a main power supply line by controlling a switching unit (SW) based on the type of an external power supply unit, the switching unit being disposed between the embedded battery, the main power supply line and the external power supply unit
wherein the main power supply line comprises a power supply route to a terminal set, the embedded battery (VBTT) supplies drive power to the terminal set by selectively connecting to the main power supply line, the external power supply unit supplies test and recharge power to the terminal set from the outside at one connector of the terminal set, wherein, if the external power supply unit comprises a recharge power supply unit (VBTO), the switching unit connects the embedded battery to the recharge power supply unit and maintains electric connection with the main power supply line and the recharge power supply unit, and and if the external power supply comprises a test power supply unit (VBTM) the switching unit isolates the embedded battery from the test power supply unit (VBTM) and from the main power supply line (VBTL).

9. The driving method of claim 8, further comprising if the external power supply unit comprises the test power supply unit (VBTM) during the isolating of the embedded battery (VBTT), the embedded battery is isolated from the main power supply line (VBTL) and the test power supply unit according to a test signal (Test_sig).

## Patentansprüche

1. Eingebettete Batteriesteuerungsschaltung, aufweisend:
eine Hauptstromversorgungsleitung (VBTL) um Leistung an einen Anschlusssatz zu liefern;
eine eingebettete Batterie (VBTT) um Treiberleistung an den Anschlusssatz durch selektives Anschließen an die Hauptstromversorgungsleitung zu liefern;
eine externe Stromversorgungseinheit um Test- und Ladeleistung an den Anschlusssatz von außen an einen Verbinder des Anschlusssatzes zu liefern; und
eine Schalteinheit (SW), die zwischen der eingebetteten Batterie, der Hauptstromversorgungsleitung und der externen Stromversorgungseinheit angeordnet ist, ist eingerichtet, um Verbindungssteuerungen gemäß dem Typ der externen Stromversorgungseinheit bereitzustellen, wobei, falls die externe Stromversorgungseinheit eine Ladestromversorgungseinheit (VBTO) aufweist, verbindet die Schalteinheit die eingebettete Batterie mit der Ladestromversorgungseinheit und hält eine elektrische Verbindung mit der Hauptstromversorgungsleitung und der Ladestromversorgungseinheit aufrecht, und falls die externe Stromversorgungseinheit eine Teststromversorgungseinheit (VBTM) aufweist, trennt die Schalteinheit die eingebettete Batterie von der Teststromversorgungseinheit und von der Hauptstromversorgungseinheit.

2. Eingebettete Batteriesteuerungsschaltung nach Anspruch ein 1, wobei die externe Stromversorgungseinheit mindestens eine von einer Ladestromversorgungseinheit (VBTO) zum Laden der eingebetteten Batterie (VBTT) und eine Teststromversorgungseinheit (VBTM) zum Inspizieren der Eigenschaften des Anschlusssatzes aufweist, wobei die Teststromversorgungseinheit und die Ladestromversorgungseinheit mit demselben Verbinder des Anschlusssatzes verbunden sind.

3. Eingebettete Batteriesteuerungsschaltung nach Anspruch 1, wobei, falls die externe Stromversorgungseinheit die Teststromversorgungseinheit aufweist, wird die eingebettete Batterie (VBTT) von mindestens einer der Hauptstromversorgungsleitung (VBTL) und der Teststromversorgungseinheit (VBTM) gemäß eines Testsignals (Test_sig) getrennt.

4. Eingebettete Batteriesteuerungsschaltung nach Anspruch 2, weiterhin aufweisend, falls der Anschlusssatz eine Ladeschaltung zum Laden der eingebetteten Batterie aufweist, eine Ausgabeeinheit zum Verteilen einer externen Leistung auf mindestens eine von der Ladestromversorgungseinheit (VBTO) und der Teststromversorgungseinheit (VBTM).

5. Eingebettete Batteriesteuerungsschaltung nach Anspruch 4, wobei die Ausgabeeinheit aufweist:
einen Ladeleistungseingabeanschluss (TA_VEXT) zum Eingeben von Ladeleistung;
einem Testleistungseingabeanschluss (Test_sig) zum Eingeben von Testleistung; und
ein Oder-Gatter (OR_G) zum Liefern von mindestens einer von der Ladeleistung und der Testleistung, die durch Leistung, die von der eingebetteten Batterie (VBTT) geliefert wird, gesteuert wird.

6. Eingebettete Batteriesteuerungsschaltung nach Anspruch 1, wobei die Schalteinheit (SW) aufweist:
eine Stromversorgungseinheit (D_In) zum Empfangen einer integrierten Leistung, die von außen geliefert wird; und
eine Leistungsverteilungs-und-Schalteinheit (DP_SW) zum wahlweisen Schalten an mindestens eine von der eingebetteten Batterie (VBTT), der Hauptstromversorgungsleitung (VBTL) und der Stromversorgungseinheit (D_In).

7. Eingebettete Batteriesteuerungsschaltung nach Anspruch 1, wobei die eingebettete Batterie (VBTT) in dem Anschlusssatz enthalten ist.

8. Treiberverfahren für eine eingebettete Batteriesteuerungsschaltung, wobei das Verfahren aufweist:
Identifizieren, ob die externe Leistung, die an eine Hauptstromversorgungsleitung (VBTL) geliefert ist, mindestens eine von einer Ladeleistung und einer Testleistung ist; und
Trennen einer eingebetteten Batterie von einer Hauptstromversorgungsleitung durch Steuern einer Schalteinheit (SW) basierend auf dem Typ einer externen Stromversorgungseinheit, wobei die Schalteinheit zwischen der eingebetteten Batterie, der Hauptstromversorgungsleitung und der externen Stromversorgungseinheit angeordnet ist,
wobei die Hauptstromversorgungsleitung einen Stromversorgungsweg an einen Anschlusssatz aufweist, die eingebettete Batterie (VBTT) eine Treiberleistung an den Anschlusssatz durch wahlweises Verbinden an die Hauptstromversorgungsleitung liefert, die externe Stromversorgungseinheit Test- und Ladeleistung an den Anschlusssatz von außen an einen Verbinder des Anschlusssatzes liefert, wobei, falls die externe Stromversorgungseinheit eine Ladestromversorgungseinheit (VBTO) aufweist, verbindet die Schalteinheit die eingebettete Batterie mit der Ladestromversorgungseinheit und hält eine elektrische Verbindung mit der Hauptstromversorgungsleitung und der Ladestromversorgungseinheit aufrecht, und, falls die externe Stromversorgung eine Teststromversorgungseinheit (VBTM) aufweist, trennt die Schalteinheit die eingebettete Batterie von der Teststromversorgungseinheit (VBTM) und von der Hauptstromversorgungsleitung (VBTL).

9. Treiberverfahren nach Anspruch 8, weiterhin aufweisend, falls die externe Stromversorgungseinheit die Teststromversorgungseinheit (VBTM) während des Trennens der eingebetteten Batterie (VBTT) aufweist, wird die eingebettete Batterie von der Hauptstromversorgungsleitung (VBTL) und der Teststromversorgungseinheit und gemäß eines Testsignals (Test_sig) getrennt.

## Revendications

1. Circuit de commande de batterie incorporée, comprenant :
une ligne d'alimentation principale (VBTL) pour délivrer une alimentation à un ensemble de terminal ;
une batterie incorporée (VBTT) pour délivrer une alimentation d'actionnement à l'ensemble de terminal par connexion sélective à la ligne d'alimentation principale ;
une unité d'alimentation extérieure pour délivrer une alimentation de test et de recharge à l'ensemble de terminal à partir de l'extérieur sur un connecteur de l'ensemble de terminal ; et
une unité de commutation (SW) disposée entre la batterie incorporée, la ligne d'alimentation principale et l'unité d'alimentation extérieure, adaptée de façon à délivrer des commandes de connexion en fonction du type d'unité d'alimentation extérieure, dans lequel, si l'unité d'alimentation extérieure comprend une unité d'alimentation de recharge (VBTO), l'unité de commutation connecte la batterie incorporée à l'unité d'alimentation de recharge et maintient une connexion électrique avec la ligne d'alimentation principale et l'unité d'alimentation de recharge, et, si l'unité d'alimentation extérieure comprend une unité d'alimentation de test (VBTM), l'unité de commutation isole la batterie incorporée de l'unité d'alimentation de test et de l'unité d'alimentation principale.

2. Circuit de commande de batterie incorporée selon la revendication 1, dans lequel l'unité d'alimentation extérieure comprend au moins l'une parmi une unité d'alimentation de recharge (VBTO) pour recharger la batterie incorporée (VBTT) et une unité d'alimentation de test (VBTM) pour inspecter les caractéristiques de l'ensemble de terminal, l'unité d'alimentation de test et l'unité d'alimentation de recharge étant connectées au même connecteur de l'ensemble de terminal.

3. Circuit de commande de batterie incorporée selon la revendication 1, dans lequel, si l'unité d'alimentation extérieure comprend l'unité d'alimentation de test, la batterie incorporée (VBTT) est isolée d'au moins l'une parmi la ligne d'alimentation principale (VBTL) et l'unité d'alimentation de test (VBTM) en fonction d'un signal de test (Test_sig).

4. Circuit de commande de batterie incorporée selon la revendication 2, comprenant de plus, si l'ensemble de terminal comprend un circuit de recharge pour recharger la batterie incorporée, une unité de sortie pour distribuer une alimentation extérieure à au moins l'une parmi l'unité d'alimentation de recharge (VBTO) et l'unité d'alimentation de test (VBTM).

5. Circuit de commande de batterie incorporée selon la revendication 4, dans lequel l'unité de sortie comprend :
une borne d'entrée d'alimentation de recharge (TA_VEXT) pour entrer une alimentation de recharge ;
une borne d'entrée d'alimentation de test (Test_sig) pour entrer une alimentation de test ; et
une porte OU (OR_G) pour délivrer au moins l'une parmi l'alimentation de recharge et l'alimentation de test, commandée par une alimentation délivrée à partir de la batterie incorporée (VBTT).

6. Circuit de commande de batterie incorporée selon la revendication 1, dans lequel l'unité de commutation (SW) comprend :
une unité d'alimentation (D_In) pour recevoir une alimentation intégrée délivrée depuis l'extérieur ; et
une unité de distribution et de commutation d'alimentation (DP_SW) pour effectuer une commutation sélective vers au moins l'une parmi la batterie incorporée (VBTT), la ligne d'alimentation principale (VBTL) et l'unité d'alimentation (D_In).

7. Circuit de commande de batterie incorporée selon la revendication 1, dans lequel la batterie incorporée (VBTT) est incluse dans l'ensemble de terminal.

8. Procédé de commande pour un circuit de commande de batterie incorporée, le procédé comprenant :
l'indentification du fait qu'une alimentation extérieure délivrée à une ligne d'alimentation principale (VBTL) est au moins l'une parmi une alimentation de recharge et une alimentation de test ; et
l'isolement d'une batterie incorporée vis-à-vis d'une ligne d'alimentation principale par commande d'une unité de commutation (SW) en fonction du type d'une unité d'alimentation extérieure, l'unité de commutation étant disposée entre la batterie incorporée, la ligne d'alimentation principale et l'unité d'alimentation extérieure, la ligne d'alimentation principale comprenant un itinéraire d'alimentation jusqu'à un ensemble de terminal, la batterie incorporée (VBTT) délivrant une alimentation d'actionnement à l'ensemble de terminal par connexion sélective à la ligne d'alimentation principale, l'unité d'alimentation extérieure délivrant une alimentation de test et de recharge à l'ensemble de terminal depuis l'extérieur sur un connecteur de l'ensemble de terminal, dans lequel, si l'unité d'alimentation extérieure comprend une unité d'alimentation de recharge (VBTO), l'unité de commutation connecte la batterie incorporée à l'unité d'alimentation de recharge et maintient une connexion électrique avec la ligne d'alimentation principale et l'unité d'alimentation de recharge, et, si l'alimentation extérieure comprend une unité d'alimentation de test (VBTM), l'unité de commutation isole la batterie incorporée de l'unité d'alimentation de test (VBTM) et de la ligne d'alimentation principale (VBTL).

9. Procédé de commande selon la revendication 8, comprenant de plus, si l'unité d'alimentation extérieure comprend l'unité d'alimentation de test (VBTM) durant l'isolement de la batterie incorporée (VBTT), la batterie incorporée isolée vis-à-vis de la ligne d'alimentation principale (VBTL) et de l'unité d'alimentation de test en fonction d'un signal de test (Test_sig).
